(19) Europäisches Patentamt
European Patent Office
Office européen des brevets

(11) **EP 4 111 122 B1**

(12) **FASCICULE DE BREVET EUROPEEN**

(45) Date de publication et mention de la délivrance du brevet:
**03.01.2024 Bulletin 2024/01**

(21) Numéro de dépôt: **21711303.4**

(22) Date de dépôt: **23.02.2021**

(51) Classification Internationale des Brevets (IPC):
*F28D 20/00* *(2006.01)*

(52) Classification Coopérative des Brevets (CPC):
**F28D 20/003; C09K 5/16;** F28D 2021/0054;
Y02E 60/14

(86) Numéro de dépôt international:
**PCT/FR2021/050310**

(87) Numéro de publication internationale:
**WO 2021/170945 (02.09.2021 Gazette 2021/35)**

(54) **PROCÉDÉ DE STOCKAGE ET DE LIBÉRATION D'ÉNERGIE THERMIQUE PAR VOIE THERMOCHIMIQUE**

THERMOCHEMISCHES VERFAHREN ZUM SPEICHERN UND FREISETZEN VON THERMISCHER ENERGIE

THERMOCHEMICAL METHOD FOR STORING AND RELEASING THERMAL ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2020 FR 2001847**

(43) Date de publication de la demande:
**04.01.2023 Bulletin 2023/01**

(73) Titulaires:
• **Orano Chimie-Enrichissement**
**92320 Châtillon (FR)**
• **CENTRE NATIONAL DE LA RECHERCHE SCIENTIFIQUE**
**75794 Paris Cedex 16 (FR)**
• **Université de Lille**
**59800 Lille (FR)**
• **Ecole Nationale Superieure De Chimie De Lille**
**59652 Villeneuve d'Ascq Cedex (FR)**

(72) Inventeurs:
• **BELONOSOV, Artem**
**59000 Lille (FR)**
• **RIVENET, Murielle**
**59780 Baisieux (FR)**
• **REY, Julien**
**87000 Limoges (FR)**
• **SENENTZ, Gérald**
**92310 Sèvres (FR)**
• **MOREL, Bertrand**
**77210 Avon (FR)**
• **DUMAS, Augustin**
**75005 Paris (FR)**

(74) Mandataire: **Brevalex**
**Tour Trinity**
**1 B Place de la Défense**
**92400 Courbevoie (FR)**

(56) Documents cités:
**CN-A- 110 193 336 FR-A1- 3 004 246**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention concerne le domaine du stockage d'énergie thermique sous forme thermochimique fondée sur une réaction réversible d'hydratation/déshydratation d'un solide. Un tel dispositif et procédé de stockage d'énergie thermique est connu, par example, du document FR 3 004 246.

**État de la technique**

La récupération/redistribution d'énergie calorifique sur un site de production de chaleur, ou éventuellement sur un autre site que celui de sa récupération, présente un grand intérêt pour répondre au problème de la fourniture en énergie (électrique ou thermique) qui soit adaptée aux variations de la demande au cours de la journée et/ou des saisons. Pouvoir stocker l'excédent d'énergie thermique (chaleur fatale) d'origine solaire ou celle produite par des installations industrielles utilisant de l'énergie fossile ou de la biomasse pour le restituer plus tard en fonction des pics de besoin permettrait de résoudre ce problème. A titre d'exemple, dans le domaine du solaire thermique à concentration, le surplus de chaleur produit aux heures d'ensoleillement peut ainsi être emmagasiné et réutilisé en fin de journée.

Trois voies émergent dans le domaine du stockage d'énergie, qui sont le stockage de chaleur sensible, le stockage de chaleur latente et le stockage thermochimique.

Le stockage sous forme d'énergie sensible repose sur l'emploi d'un matériau solide ou liquide dont on fait varier la température sans provoquer de changement de phase. La quantité d'énergie stockée sous forme de chaleur sensible est égale à :

$$Q = m \, (\Delta T) \, C_p,$$

où m est la masse du matériau, $\Delta T$ est la différence de température en K et $C_p$ la capacité thermique en $J.K^{-1}.kg^{-1}$.

Le stockage de chaleur sensible présente l'inconvénient que le matériau utilisé possède généralement une faible densité énergétique, ce qui nécessite d'employer de grands volumes dudit matériau. Un tel système, du fait de son encombrement au sol, est difficile à implémenter au niveau industriel ou en milieu urbain.

Le stockage sous forme de chaleur latente met en oeuvre un matériau à changement de phase (MCP), généralement solide/liquide ou liquide/vapeur, avec une faible variation de sa température. Ainsi, lorsque l'on chauffe le matériau, celui-ci accumule d'abord de la chaleur sensible pour atteindre sa température de changement de phase lors de laquelle l'énergie calorifique ne sert plus qu'à fournir l'énergie nécessaire au changement de phase. Les transformations liquide-gaz sont les plus intéressantes de par leur chaleur latente généralement élevée mais présentent des contraintes de mise en oeuvre liées au changement de volume associé à l'évaporation du liquide mais également des risques liés au phénomène de dépression qui peut intervenir au cours du refroidissement du gaz. Les matériaux à changement de phase solide/liquide sont un bon compromis entre sécurité et performance de stockage.

Ces deux premières voies de stockage sous forme de chaleur sensible et latente requièrent généralement la mise en oeuvre d'une isolation thermique efficace avec néanmoins une perte inévitable dans le temps de la chaleur stockée.

Le stockage de chaleur sous forme thermochimique consiste à utiliser une réaction chimique réversible qui est endothermique dans un sens et exothermique dans l'autre afin, respectivement, d'emmagasiner la chaleur et ensuite de la libérer en fonction des besoins.

Le stockage peut par exemple mettre en jeu une réaction de type sorption/désorption dans laquelle un composé (appelée adsorbat) s'adsorbe à la surface d'un matériau solide (appelé sorbant) ou s'absorbe à l'intérieur d'un matériau solide poreux avec libération de chaleur et, inversement, le soluté adsorbé ou absorbé se désorbe du matériau solide en présence d'apport d'énergie.

Une classe de réaction réversible qui peut être envisagée est une réaction réversible de déshydratation/hydratation d'un composé cristallin. Ainsi la réaction de déshydratation, qui peut se faire jusqu'à l'obtention de la forme anhydre du composé, nécessite un apport d'énergie thermique qui peut être ensuite libérée lorsque le composé déshydraté ou partiellement déshydraté est remis en contact avec de l'eau ou de la vapeur d'eau.

Cette forme de stockage de la chaleur présente l'avantage de pouvoir stocker l'énergie sur de longues périodes, quasiment sans perte et sans avoir recours à un système complexe d'isolation thermique, à la condition de séparer et conserver indépendamment les produits de la réaction. Afin que le procédé décrit plus haut soit industrialisable, on doit disposer d'un matériau qui, en plus de présenter une densité énergétique élevée, peut subir plusieurs cycles d'hydratation/déshydratation en gardant ses capacités de stockage et de restitution de la chaleur.

Divers matériaux solides pour le stockage thermochimique ont été déjà envisagés. Par exemple, le document FR 3 004 246 décrit un procédé de stockage de chaleur utilisant le couple $Ca(OH)_2$/CaO et $Mg(OH)_2$/MgO sous forme solide.

Un but de la présente invention est de fournir un nouveau procédé de stockage fondé sur une réaction réversible de déshydratation/hydratation d'un matériau solide à base de thorium ou d'uranium, qui sont des coproduits de l'industrie d'extraction et d'enrichissement de l'uranium.

**Résumé de l'invention**

La présente invention se rapporte donc à un procédé de stockage et de libération d'énergie thermique par voie thermochimique au moyen d'un composé sous forme solide de formule $AO_xB_y.zH_2O$, où :

- A est un élément choisi parmi l'uranium (U) et le thorium (Th) ;
- O est l'élément oxygène ;
- B est un anion ou un oxoanion ;
- x est un nombre compris entre 0 et 4 ;
- y est un nombre compris entre 0 et 2 ;
- z est un nombre supérieur à 0 et inférieur ou égal à 10 ;

étant entendu que l'un au moins de x et y est différent de 0 et que le composé de formule $Th(SO_4)_2.xH_2O$ est exclu.

Le procédé comprend les étapes successives suivantes :

(a) on chauffe le composé jusqu'à une température et pendant une durée suffisantes pour déshydrater au moins partiellement ledit composé ;
(b) on conserve le composé au moins partiellement déshydraté à l'abri de l'humidité ;
(c) on met en contact le composé au moins partiellement déshydraté avec de l'eau pour libérer l'énergie thermique stockée à l'étape (a) ; et
(d) on récupère l'énergie thermique libérée.

Le procédé selon l'invention peut donc fonctionner par alternance de cycles de charge et de décharge et est adapté pour répondre au problème de la fourniture d'énergie décalée dans le temps, voire dans l'espace.

Le procédé selon l'invention fait ainsi appel à l'enthalpie d'hydratation de sels métalliques ou d'oxyde métalliques pour assurer le stockage de l'énergie thermique. L'utilisation d'eau, réactif non toxique, offre la possibilité de pouvoir travailler dans un système ouvert (sous réserve de mettre en oeuvre éventuellement des mesures nécessaires pour s'assurer que les rejets aqueux respectent les normes) et de présenter moins de risques du point de vue sanitaire et environnemental.

Grâce à l'utilisation d'un composé tel que défini plus haut, le procédé selon l'invention présente plusieurs autres avantages qui sont :

- un stockage à densité énergétique élevée, par exemple d'au moins 1 $GJ/m^3$;
- une restitution de la chaleur qui peut se faire à température quasi constante ;
- une durée de stockage théoriquement illimitée ;
- une possibilité de fonctionnement dans une plage de température pour le stockage qui est compatible avec les installations industrielles capables de fournir la chaleur nécessaire à la réaction de déshydratation, telles que les centrales d'énergies, les raffineries ou encore les usines de transformation de matière ;
- une valorisation à court et moyen termes des stocks de thorium et d'uranium appauvri en attendant leur utilisation future comme matière première dans des réacteurs nucléaires à neutrons rapides.

Selon l'invention, B est choisi de préférence parmi les ions halogénures, l'ion hydroxyde et l'ion sulfate.

Dans un mode de réalisation préféré, le composé pour le stockage de chaleur est choisi parmi les composés de formule :

- $UO_2B_2.zH_2O$, B étant choisi parmi les ions F⁻, Br⁻ et Cl⁻,
- $AB_4.zH_2O$, B étant choisi parmi les ions F⁻ et Br⁻,
- $UO_4.zH_2O$,
- $UO_3.zH_2O$, et
- $U(SO_4)y.zH_2O$.

Dans un mode de réalisation préféré, le composé thermochimique est choisi parmi les composés de formule :

ThBr$_4$.10H$_2$O, UF$_4$.2H$_2$O, UF$_4$.2,5H$_2$O, UO$_2$F$_2$.4H$_2$O, UO$_2$F$_2$.1,6H$_2$O, U(SO$_4$)$_2$.4H$_2$O, UO$_4$.2H$_2$O, UO$_3$.2H$_2$O et UO$_3$.0,8-1H$_2$O.

Selon un mode de mise en oeuvre du procédé, l'étape (a) est opérée jusqu'à obtenir une déshydratation du composé de manière à former le composé anhydre ou quasi-anhydre. Dans le contexte de l'invention, on entend par le terme "quasi-anhydre" désigner des phases solides pour lesquelles l'eau de structure est comprise entre $0 < z < 0,6$ mol par mol de phase solide.

En fonction du composé thermochimique à déshydrater, la température de chauffage peut être comprise entre 50 et 500 °C, de préférence comprise entre 80 et 350 °C. La durée est généralement comprise entre 15 minutes et 30 heures, de préférence comprise entre 30 minutes et 2 heures et dépendra notamment de la quantité de matière et de sa mise en forme.

De préférence, l'étape (c) d'hydratation du composé partiellement ou totalement déshydraté est réalisée en présence de vapeur d'eau ou par mise en contact du composé déshydraté avec de l'eau liquide.

Dans le cadre de l'invention, le chauffage du composé (étape (a)) en vue de le déshydrater peut être réalisé à partir de tout type d'énergie comme par exemple de l'énergie solaire et/ou de l'énergie thermique d'origine industrielle. Par exemple, cette énergie peut être issue de centrales d'énergies nucléaire, à charbon, biomasse, de raffineries ou d'usines de transformation de matière (cimenterie, sidérurgie, incinérateur). Par exemple, le chauffage peut consister à mettre en contact le composé thermochimique avec un flux d'air chaud, éventuellement séché ou déshumidifié.

La présente invention a également pour objet un dispositif de stockage d'énergie thermique qui comprend :

- une enceinte incluant au moins un lit contenant un composé tel que défini plus haut ;
- au moins un moyen de chauffage du lit ; et
- au moins un moyen pour évacuer l'eau de déshydratation.

Le dispositif selon l'invention permet de conserver à l'abri de l'humidité le composé au moins partiellement déshydraté jusqu'au moment où ce dernier sera remis en contact avec de l'eau afin de restituer la chaleur stockée.

Le dispositif selon l'invention peut être conçu de manière à être transportable sur un site où l'énergie peut être avantageusement récupérée.

Selon un mode de réalisation, le dispositif de stockage selon l'invention comprend en outre un moyen de distribution d'eau dans l'enceinte et un moyen d'évacuation de l'énergie thermique libérée. Dans ce mode de réaction, le dispositif est utilisé à la fois pour stocker et restituer la chaleur.

Le composé thermochimique contenu dans le lit de matériau peut se présenter sous forme d'une poudre, de billes, d'extrudés, de pastilles.

Lorsque le composé est sous forme de poudre, le lit est de préférence un lit fluide.

Lorsque le composé se présente sous forme de billes, d'extrudés ou de pastilles, le lit est de préférence un lit fixe.

Le procédé selon l'invention peut également mettre en oeuvre le composé thermochimique déposé sur un support solide inerte chimiquement et poreux, ledit support pouvant être avantageusement mis sous une forme adaptée au type de réacteur utilisé (granules, bille, pastille, bâtonnet, etc.). Le matériau du support peut être de nature organique, inorganique ou composite (organique, inorganique). Le matériau du support inorganique est choisi de préférence parmi les zéolithes (naturelles ou synthétiques), les alumines, les silices, les alumino-silicates, l'oxyde de zirconium, l'oxyde de titane, le nitrure de silicium et le charbon actif. À titre d'exemple non limitatif, le matériau du support inorganique est une alumine-a, une alumine de transition ($\gamma$, $\delta$, $\theta$), une silice SiO$_2$ Kieselguhr ou encore un gel de silice. Alternativement, le support peut comprendre une matrice céramique à base de carbone (carbone vitreux) ou de carbure de silicium (SiC).

Le matériau de support organique peut être à base de polymères naturels (e.g. cellulose) ou synthétiques (e.g. polyuréthane, polyesters, polyimides, polymères de hautes performances). Selon un mode de mise en oeuvre préféré, le support de nature polymère organique se présente sous la forme d'une mousse.

Le composé thermochimique dispersé sur un support peut être obtenu par toute méthode connue de l'homme du métier et notamment par la méthode d'imprégnation "à sec" ou "en excès" du support dans une solution contenant le précurseur du composé thermochimique, qui est généralement suivie d'une étape de séchage et/ou de calcination.

Le support inorganique peut présenter une surface spécifique et un volume poreux total variés, allant respectivement de 20 à 500 m$^2$/g et de 0,5 à 3 cm$^3$/g.

Lorsque le support est du type mousse d'un polymère organique, par exemple de polyuréthane, il peut présenter au moins une des caractéristiques suivantes :

- des cavités volumiques (i.e. pores ou cellules) dont le diamètre de sphère équivalent est compris entre 0,25 mm et 1,1 mm, de préférence entre 0,55 mm et 0,99 mm,
- une surface spécifique interne comprise entre 4000 et 15000 m$^2$/m$^3$, de préférence entre 8000 et 10000 m$^2$/m$^3$, et
- une densité apparente (i.e. masse sur volume apparent) mesurée dans l'air comprise entre 10 et 90 g/L, avantageusement entre 10 et 80 g/L, de préférence entre 15 et 45 g/L, tel qu'entre 20 et 45 g/L.

**Description détaillée de l'invention**

Les autres caractéristiques et avantages de l'invention vont apparaître à la lecture de la description qui va suivre, donnée à titre uniquement illustratif et non limitatif, et en référence aux dessins des figures 1 à 6.

La figure 1 est un diagramme bloc du principe de stockage et de décharge de la chaleur mettant en oeuvre le procédé selon l'invention.
La figure 2 est une représentation en coupe d'un dispositif de stockage de chaleur selon l'invention.
La figure 3 est une représentation en coupe d'un autre mode de réalisation d'un dispositif de stockage de chaleur selon l'invention qui permet de mener des cycles de stockage/décharge.
La figure 4 est un diagramme bloc résumant la voie de synthèse préférée pour fournir la métaschoepite ($UO_3.2H_2O$) qui est ensuite utilisée comme matériau pour le stockage thermochimique.
La figure 5 est un graphique montrant la variation de la masse de la poudre d'$UO_2F_2.xH_2O$ (notée $\Delta m$ et exprimée en %) lors des cycles d'hydratation et déshydratation (en fonction du temps et de la température, respectivement notés t et T et exprimés en h et en °C, et de l'humidité relative notée RH et exprimée en %).
La figure 6 est un graphique représentant l'évolution du taux d'hydratation de comprimés d'$UO_3$ amorphe obtenu à partir de la studtite en fonction du nombre de cycles d'hydratation et déshydratation.

Généralement, les éléments semblables sont dénotés par des références identiques dans les figures.

Dans la description qui va suivre, le terme "composé thermochimique" désigne tout composé quel que soit son état d'hydratation, y compris le composé dans sa forme anhydre ou quasi-anhydre.

L'invention se rapporte à un procédé de récupération/restitution d'énergie calorifique par voie thermochimique mettant en jeu un matériau solide capable de subir une réaction réversible de déshydratation et d'hydratation.

Le principe général du procédé est décrit ci-après dans lequel le composé thermochimique selon l'invention est désigné par les lettres "AB".

Lors de la phase de charge, l'énergie thermique issue par exemple d'une centrale d'énergie ou d'une usine, est fournie à un réacteur thermochimique contenant le composé de formule XY afin de déshydrater ledit composé XY et ainsi former le composé X (solide) et le composé Y (ici de l'eau). Les produits de la réaction endothermique de déshydratation sont ensuite stockés séparément pendant une durée indéterminée et éventuellement à température ambiante. Ensuite, pour restituer l'énergie thermique emmagasinée lors de la phase dite de restitution (ou décharge), les composés X et Y sont mis en contact dans des conditions de température et éventuellement de pression appropriées afin qu'ils réagissent pour libérer la chaleur de réaction et ainsi régénérer le composé XY. Cette énergie thermique restituée est par exemple transmise à une unité de production d'énergie capable d'utiliser la chaleur générée ou bien employée dans une application de chauffage urbain mettant en oeuvre par exemple un système comportant un circuit primaire d'eau et un circuit secondaire alimentant les consommateurs en eau chaude, dans lequel l'eau du circuit primaire est apte à être chauffée par la chaleur dégagée par la réaction thermochimique de manière à produire un flux d'eau chaude du circuit primaire qui est capable d'échanger de la chaleur avec un flux d'eau froide du circuit secondaire.

Selon l'invention, le composé thermochimique mis en oeuvre dans le procédé est un sel ou un oxyde métallique hydraté capable de réagir selon la réaction :

$$AB.(m+n)H_2O \leftrightarrow AB.mH_2O + nH_2O$$

avec :

- m étant un nombre égal ou supérieur à 0 ; et
- n étant un nombre strictement supérieur à 0.

Dans le cadre de la présente invention, le processus de déshydratation du composé thermochimique (la phase de stockage) peut conduire à toutes les formes hydratées dudit composé thermochimique voire jusqu'à sa forme anhydre. Le composé thermochimique mis en oeuvre dans le présent procédé doit donc être capable de se lier à de l'eau selon une réaction exothermique, c'est-à-dire que le composé thermochimique, dans son état d'hydratation considéré, présente une enthalpie d'hydratation qui est négative.

Selon l'invention, le composé thermochimique susceptible d'emmagasiner de la chaleur est un sel hydraté de formule générale $AO_xB_y.zH_2O$, dans lequel :

- A est un élément choisi parmi l'uranium (U) et le thorium (Th) ;
- O est l'élément oxygène ;
- B est un anion ou un oxoanion ;

- x est un nombre compris entre 0 et 4 ;
- y est un nombre compris entre 0 et 2 ;
- z est un nombre supérieur à 0 et inférieur ou égal à 10 ;

avec l'un au moins de x et y qui est différent de 0 et à l'exclusion des composés de formule $Th(SO_4)_2.xH_2O$.

De préférence, le composé thermochimique dans sa forme hydratée qui est apte à stocker de la chaleur par perte de molécule d'eau présente une densité énergétique d'au moins 1 $GJ/m^3$, valeur qui est nettement supérieure à celle de l'eau qui est d'environ 0,2 $GJ/m^3$.

De préférence, le composant B est choisi parmi les halogénures, l'ion hydroxyde et l'ion sulfate.

Selon un mode de réalisation, le composé thermochimique est un halogénure d'uranyle de formule $UO_2B_2.zH_2O$ avec B étant $F^-$, $Br^-$ ou $Cl^-$, avec une préférence pour le difluorure d'uranyle $UO_2F_2.zH_2O$ avec z étant égal à 1,6 ; 2 ou 4.

Le difluorure d'uranyle peut être préparé, selon deux méthodes principales de synthèse :

- par voie sèche, à partir d'oxydes d'uranium sur lesquels on fait agir du fluorure d'hydrogène, conduisant alors à un difluorure d'uranyle faiblement hydraté qui contient 1 à 1,5 % d'eau ;
- par voie humide qui consiste en une attaque d'oxydes d'uranium ou d'un sel d'uranyle par des solutions d'acide fluorhydrique, ou encore hydrolyse d'un fluorure d'uranium, menant à la cristallisation du dihydrate de difluorure d'uranyle.

Une autre méthode de synthèse consiste en l'hydrolyse (ou "noyage") d'hexafluorure d'uranium réalisée en évitant l'échauffement du milieu. La purification du précipité obtenu s'effectue ensuite par recristallisations successives jusqu'à l'obtention d'un rapport U/F égal à la teneur stoechiométrique. Le composé hydraté peut ensuite subir une étape de séchage afin de former un fluorure d'uranyle anhydre (ou quasi-anhydre) qui, par la suite, peut être réhydraté.

Pour une application de stockage de la chaleur, on privilégiera le difluorure d'uranyle de formule $UO_2F_2.4H_2O$ qui est susceptible de se déshydrater de manière réversible en $\alpha$-$UO_2F_2$ anhydre. La réaction de déshydratation est de préférence menée en chauffant le solide à une température comprise entre 150 °C et 250 °C sous un flux d'air sec. L'hydratation est réalisée par exemple à température ambiante sous air avec une humidité relative comprise entre 30 et 90 %, de préférence comprise entre 50 et 85 %. On veillera à ne pas dépasser une humidité relative de 90 % pour éviter une prise en eau trop rapide qui entraînerait la déliquescence de la phase solide.

Dans le cadre de l'invention, il est également possible de mettre en oeuvre la forme dihydrate du difluorure d'uranyle de formule $UO_2F_2.2H_2O$ qui est susceptible d'être déshydratée par chauffage à une température comprise entre 150 °C et 250 °C jusqu'à former la phase anhydre $\alpha$-$UO_2F_2$. Cette dernière peut être réhydratée dans les mêmes conditions que celles décrites plus haut.

Dans un autre mode de réalisation, le composé thermochimique est un hydrate de tétrafluorure ou tétrabromure de thorium ou d'uranium répondant à la formule $AB_4.zH_2O$ dans lequel :

- B est choisi parmi les ions $F^-$ et $Br^-$,
- A est l'un des éléments Th et U, et
- z est supérieur à 0 et inférieur ou égal à 10.

On peut ainsi choisir comme composé thermochimique répondant à la formule ci-dessus, le tétrabromure de thorium décahydraté ($ThBr_4.10H_2O$). Ce dernier peut être obtenu par évaporation d'une solution d'hydroxyde de thorium en présence d'acide bromhydrique par chauffage comme décrit dans Wilson et al. (Structure of the Homoleptic Thorium(IV) Aqua Ion $[Th(H2O)10]Br4$. Angew. Chemie Int. Ed. 46, 8043-8045 (2007)).

Dans le cadre de l'invention, le composé thermochimique est à base de tétraflururore d'uranium qui est un intermédiaire réactionnel dans la fabrication d'$UF_6$. Pour une application en stockage thermochimique, on mettra en oeuvre en particulier le composé de formule $UF_4.2,5H_2O$ présentant de préférence une surface spécifique BET d'au moins 1,4 $m^2/g$. La déshydratation de l'$UF_4.2,5H_2O$ en $UF_4$ anhydre peut être obtenue par chauffage du composé à une température comprise entre 200 °C et 250 °C et l'hydratation dudit composé anhydre peut être conduite par mise en contact soit avec de l'eau éventuellement additionnée d'acide fluorhydrique, soit en présence d'air humidifié, par exemple ayant une humidité relative d'au moins 97 %.

Une voie d'obtention du tétrafluorure d'uranium repose sur l'hydrofluoration d'oxyde d'uranium $UO_2$, procédé qui est bien connu de l'homme du métier dans le domaine de la conversion de l'uranium.

Selon un autre mode de réalisation préféré, le procédé de stockage de chaleur met en oeuvre un sel d'uranium de formule $UO_3.2H_2O$, qui correspond à la phase métaschoepite, lequel est capable de se déshydrater de manière réversible en $UO_3$ amorphe. Selon l'invention, on préfère utiliser l'$UO_3$ amorphe car il présente une cinétique d'hydratation plus élevée que celle des phases cristallisées ($\alpha$, $\beta$, $\gamma$, $\delta$, $\varepsilon$, $\zeta$ et $\eta$).

La métaschoepite $UO_3.2H_2O$ est par exemple obtenue par hydratation d'un précurseur $UO_3$ amorphe. Ce

dernier peut être synthétisé par chauffage du nitrate d'uranyle hexahydraté entre 200 °C et 400 °C ou d'un oxalate d'uranium (IV) entre 150 °C et 300 °C. Cette même phase peut également être préparée par calcination du polyuranate d'ammonium entre 350 °C et 600 °C ou du diuranate d'ammonium entre 150 °C et 500 °C. Une autre voie pour fournir l'$UO_3$ amorphe consiste à procéder à un traitement thermique entre 160 °C et 525 °C d'un précipité de peroxyde d'uranyle de formule $UO_2(O_2)(H_2O)_2.2H_2O$ (studtite).

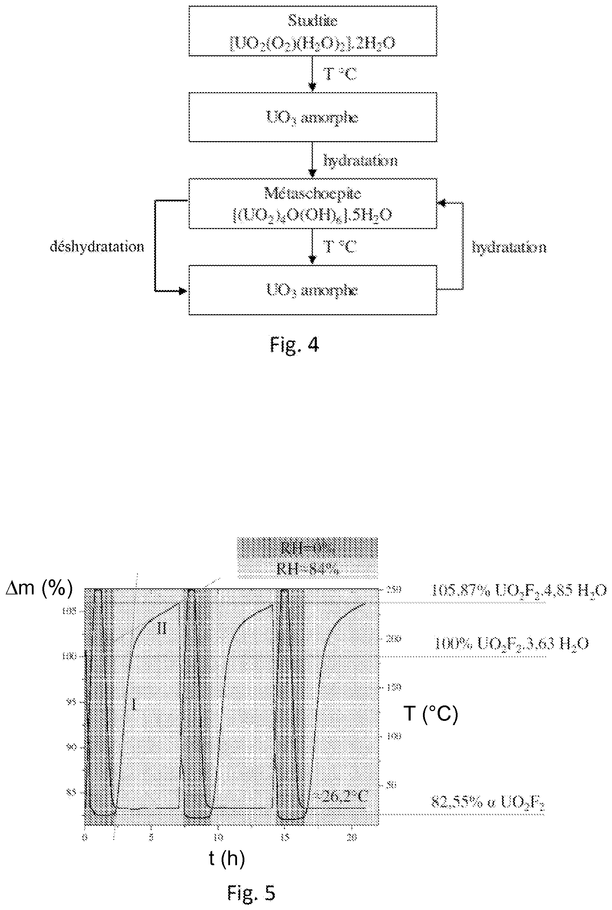

La figure 4 est un schéma de principe résumant la voie de synthèse préférée pour fournir la métaschoepite à partir de studtite qui est ensuite utilisée comme matériau pour le stockage thermochimique de la chaleur. En référence à la figure 4, la studtite est calcinée à une température comprise entre 250 °C et 300 °C de manière à fournir de l'$UO_3$ amorphe qui subit ensuite une étape d'hydratation préférentiellement réalisée à une température comprise entre 25 °C et 50 °C, sous air avec une humidité relative supérieure à 70 % conduisant à la métaschoepite. De manière très préférée, l'hydratation est menée à une température initiale d'environ 30 °C en présence d'air dont l'humidité relative est d'environ 95 %. De façon alternative, on peut procéder à l'hydratation de l'$UO_3$ amorphe (ex-studtite) par mise en contact du solide avec de la vapeur d'eau ou de l'eau liquide.

La métaschoepite est utilisée comme matériau pour le stockage thermochimique au travers des cycles de déshydratation/hydratation. Pour les étapes de déshydratation subséquentes, on peut opérer par chauffage de la métaschoepite en $UO_3$ amorphe à une température comprise entre 300 °C et 350 °C et sous balayage de gaz notamment pour éviter la formation du composé $UO_{2,9}$. Quant à l'hydratation, elle peut être menée dans les conditions mentionnées ci-dessus à savoir à une température d'environ 30 °C en présence d'air dont l'humidité relative est d'environ 95 %.

Selon l'invention, il est possible de restaurer les propriétés de stockage du couple métaschoepite/$UO_3$ amorphe après plusieurs cycles de déshydratation/hydratation en procédant à une oxydation partielle de l'$UO_3$ amorphe en $UO_4.2H_2O$ lors de l'étape d'hydratation. Cette oxydation concomitante à l'hydratation peut être obtenue par ajout de peroxyde d'hydrogène $H_2O_2$ dans le milieu d'hydratation ou par balayage d'ozone $O_3$. La quantité d'$H_2O_2$ qui est apportée est telle que le rapport $H_2O_2/U$ est généralement compris entre 0,01 et 2 (mol/mol) et, de préférence, ce rapport est égal à 0,25.

Selon un autre mode de réalisation, on peut mettre en oeuvre en remplacement du couple $UO_3$ amorphe/$UO_3.2H_2O$, le couple $UO_3$ amorphe/$UO_3.0,8$-$1H_2O$. Ce mode de mise en oeuvre permet de fonctionner à plus haute température pour l'étape d'hydratation (T > 50 °C) et ainsi d'améliorer la cinétique, tout en gardant une densité énergétique (0,72-1,15 $Gj/m^3$) proche de celle de $UO_3.2H_2O$ (1,15-1,72 $Gj/m^3$).

Le procédé de stockage peut également utiliser comme matériau de stockage thermochimique les couples $UO_4.2H_2O/UO_3$ amorphe ou $UO_4.2H_2O/UO_3.0,8$-$1H_2O$ à la condition de procéder à une hydratation en milieu oxydant afin de former le peroxyde d'uranium dihydrate ($UO_4.2H_2O$).

Selon un mode de réalisation, le composé thermochimique selon l'invention peut être mis en oeuvre sous forme dispersée sur un support organique ou inorganique réfractaire, c'est-à-dire, dans le cas présent, qui n'est pas susceptible de se dégrader lorsqu'il est soumis à la chaleur générée lors du fonctionnement du réacteur de stockage de chaleur.

On peut ainsi utiliser des matériaux de support inorganique couramment employés dans le domaine de la catalyse hétérogène, tels que les zéolithes (naturelles ou synthétiques), les alumines, les silices, les alumino-silicates, l'oxyde de magnésium, l'oxyde de zirconium, l'oxyde de titane, le nitrure de silicium, le carbure de silicium ou le charbon actif. Par exemple, le matériau du support inorganique est une alumine-a, une alumine de transition ($\gamma$, $\delta$, $\theta$), une silice $SiO_2$ Kieselguhr, un gel de silice ou d'alumine ayant subi un traitement hydrothermal.

Le support, lorsqu'il est de nature inorganique, peut être employé sous forme de billes, d'extrudés, de pastilles ou d'agglomérats irréguliers et non sphériques dont la forme spécifique peut résulter d'une étape de concassage.

Dans le cadre de l'invention, on peut également disperser le composé thermochimique sur un support organique de type polymère naturel (e.g. de la cellulose) ou synthétique (e.g polyuréthane). De préférence, le support organique polymère a la structure d'une mousse flexible ou rigide. Les pièces de support, de formes variées, peuvent être obtenues, par exemple, par découpe ou poinçonnage d'un bloc en mousse ou bien directement par moulage à la géométrie souhaitée lors de la fabrication de ladite mousse (technique de moulage par injection).

Le composé thermochimique dispersé sur le support organique ou inorganique est obtenu de préférence, notamment pour des raisons de facilité de mise en oeuvre, par un procédé d'imprégnation du support avec une solution contenant un précurseur du composé thermochimique, suivie d'une étape de traitement thermique du support imprégné. L'étape d'imprégnation est soit une imprégnation "en excès", soit une imprégnation "à sec". Par imprégnation "à sec", on entend une imprégnation par un volume de solution inférieur ou au maximum égal au volume poreux total du support, lequel peut être mesuré par la technique de porosimétrie au mercure selon la norme ASTM D4284 avec un angle de mouillage de 140° ou expérimentalement par pesée après trempage du support dans de l'eau.

À titre d'exemple, un support sur lequel est dispersé de la métaschoepite peut être préparé au moyen des étapes suivantes :

(i) on met en contact le support avec une solution aqueuse d'imprégnation contenant du nitrate d'uranyle $UO_2(NO_3)_2.nH_2O$ ou d'oxalate d'uranium (IV), l'imprégnation étant effectuée soit "à sec", soit "en excès" ;

(ii) éventuellement, on sépare le support imprégné de la solution aqueuse d'imprégnation ;

(iii) optionnellement, on met en contact le support imprégné avec une solution de peroxyde d'hydrogène ;

(iv) on effectue un traitement thermique du support imprégné obtenu à l'issue de l'étape (i), de l'étape (ii) ou de l'étape (iii), sous air, à une température comprise entre 200 et 400 °C de manière à former de l'$UO_3$ amorphe.

(v) on met en contact le support contenant de l'$UO_3$ amorphe issue de l'étape (iv) avec de l'eau de manière à convertir l'$UO_3$ amorphe en $UO_3.2H_2O$.

Selon un autre mode de préparation d'un support comprenant de la métaschoepite dispersée, l'étape (i) d'imprégnation est réalisée à partir d'une solution uranifère (par exemple du nitrate d'uranyle $UO_2(NO_3)_2$) contenant du peroxyde d'hydrogène $H_2O_2$ et éventuellement des carbonates.

La synthèse d'un matériau thermochimique comprenant du tétrabromure de thorium ($ThBr_4$) dispersé sur un support comprend, par exemple, une étape d'imprégnation du support avec une solution d'hydroxyde de thorium et d'acide bromhydrique suivie d'un traitement thermique dudit support imprégné.

Une autre méthode de préparation d'un matériau thermochimique supporté, notamment adaptée pour déposer du fluorure d'uranyle au sein du support, consiste à réaliser une étape d'imprégnation du support avec une solution de précurseur du composé thermochimique suivie d'une étape de précipitation *in situ* des précurseurs par évaporation du solvant par chauffage. Alternativement, en lieu et place de l'étape d'évaporation par chauffage, on peut provoquer la précipitation du composé thermochimique au sein de la matrice de support par mise en contact dudit support imprégné avec un solvant (miscible avec le solvant de la solution de précurseurs) mais dans lequel les précurseurs sont moins solubles.

Selon l'invention, le support inorganique peut présenter les caractéristiques suivantes :

- une surface spécifique comprise entre 20 et 500 $m^2$/g (déterminée par la méthode B.E.T selon la norme ASTM D3663 telle que décrite dans l'ouvrage Rouquerol F.; Rouquerol J.; Singh K. "Adsorption by Powders & Porous Solids: Principle, methodology and applications", Academic Press, 1999*) ;*
- un volume poreux total compris entre 0,5 à 3 $cm^3$/g (mesuré par porosimétrie au mercure selon la norme ASTM D4284 avec un angle de mouillage de 140°, telle que décrite dans le même ouvrage) .

Lorsque le support est une mousse d'un polymère organique, par exemple de polyuréthane, il peut présenter au moins une des caractéristiques suivantes :

- des cavités volumiques (i.e. pores ou cellules) dont le diamètre de sphère équivalent est compris entre 0,25 mm et 1,1 mm, de préférence entre 0,55 et 0,99 mm,
- une surface spécifique interne comprise entre 4000 et 15000 $m^2/m^3$, de préférence entre 8000 et 10000 $m^2/m^3$, et
- une densité apparente (i.e. masse sur volume apparent) mesurée dans l'air comprise entre 10 et 90 g/L, avantageusement entre 10 et 80 g/L, de préférence entre 15 et 45 g/L, tel qu'entre 20 et 45 g/L.

Le procédé selon l'invention peut être couplé à tout procédé de production d'énergie susceptible d'utiliser de la chaleur qui doit être collectée pour un usage décalé dans le temps.

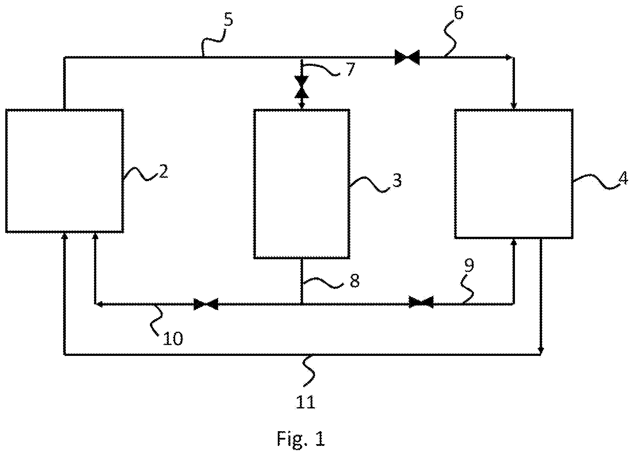

La figure 1 représente un exemple d'un système de stockage de chaleur en boucle fermée mettant en oeuvre le procédé selon l'invention et utilisant une méthode d'échange thermique par fluide caloporteur.

Le système de stockage de chaleur 1 comprend une source d'énergie thermique 2, une unité de stockage de chaleur 3 contenant le composé thermochimique à base de thorium et/ou d'uranium et une unité de production d'énergie 4, qui comprend par exemple un générateur de vapeur couplé à une turbine à vapeur pour produire de l'électricité. Un fluide caloporteur est mis en circulation à travers un système de tuyauterie 5, 6, 7, 8, 9, 10, 11 afin de transporter l'énergie thermique entre les différents éléments 2, 3, 4 du système de stockage de chaleur. Le fluide caloporteur peut ainsi circuler entre la source d'énergie thermique 2 et l'unité de stockage de chaleur 3 (via les conduits 5, 7, 8, 10), entre l'unité de stockage de chaleur 3 et l'unité de production d'énergie 4 (via les conduits 8, 9, 11) et enfin entre la source d'énergie thermique 2 et l'unité de production d'énergie 4 (via les conduits 5, 6, 11).

Le système 1 est ainsi configuré pour :

a. produire directement de l'énergie en faisant circuler le fluide caloporteur directement entre la source d'énergie thermique 2 et l'unité de production d'énergie 4 (boucle de génération directe) ;

b. réaliser le stockage de l'énergie thermique en excès sous forme d'énergie chimique dans le composé thermochimique en faisant circuler sélectivement le fluide caloporteur entre la source d'énergie thermique 2 et l'unité de stockage de chaleur 3 (boucle de stockage) ; et

c. générer de l'énergie à partir d'énergie thermique stockée (processus de décharge) par une circulation sélective du fluide caloporteur entre l'unité de stockage de chaleur 3 et l'unité de production d'énergie 4 (boucle de restitution).

Il est bien entendu possible d'opérer en même temps les deux boucles de circulation a. et b. décrites plus haut lorsque à un moment donné l'énergie thermique générée par la source 2 dépasse les besoins en énergie. Dans ce cas, une partie du fluide caloporteur circule dans la boucle de génération directe et une autre partie du fluide caloporteur circule dans la boucle de charge afin de stoker l'excédent de chaleur.

Enfin, il est également envisageable d'effectuer les boucles a. et c. de manière concomitante afin de répondre à un pic ponctuel de demande en énergie.

Toute source d'énergie capable de produire de la chaleur pour déshydrater au moins partiellement le composé thermochimique peut être utilisée, comme par exemple de l'énergie solaire ou de l'énergie thermique d'origine industrielle (raffinerie, centrale nucléaire, sidérurgie...).

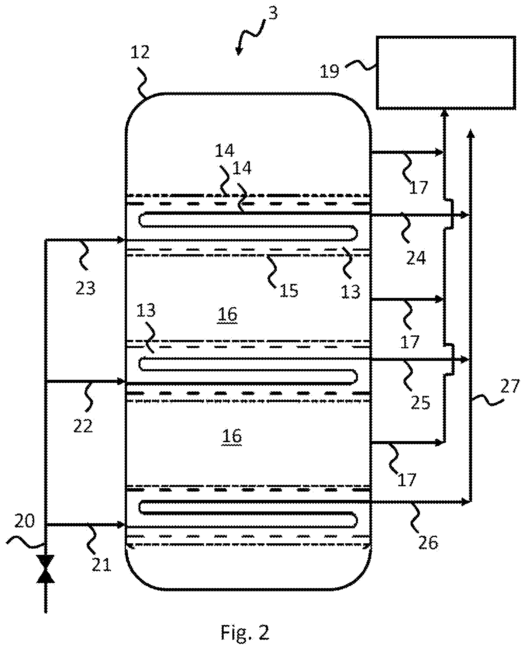

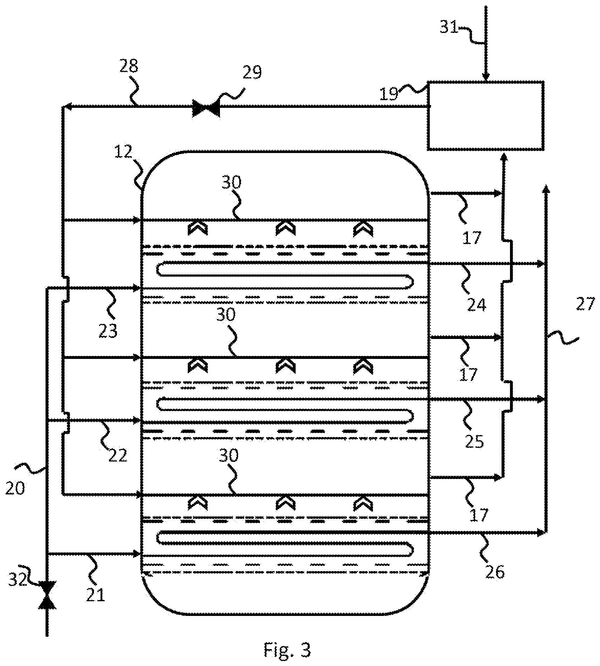

Le procédé de stockage/restitution de la chaleur selon l'invention comprend différentes étapes qui sont détaillées ci-dessous, éventuellement en référence aux dessins des figures 2 et 3.

L'étape (a) du procédé consiste à déshydrater le composé thermochimique en lui apportant la chaleur nécessaire pour éliminer une partie de l'eau, voire toute l'eau contenue dans le composé mais également pour vaporiser l'eau dégagée par la réaction de déshydratation. L'eau sous forme vapeur est évacuée du réacteur par un moyen de soutirage afin de l'isoler du produit déshydraté. Comme indiqué dans la figure 2, cette étape peut être conduite dans un réacteur thermochimique 3 qui comprend une enceinte 12 contenant au moins un lit 13 de composé thermique.

L'apport de chaleur dans l'enceinte 12 pour chauffer le lit 13 peut être réalisé par différentes méthodes connues de l'homme du métier et qui peut dépendre de la forme sous laquelle le composé thermochimique est mis en oeuvre. Le composé thermochimique peut se présenter sous la forme d'une poudre ou sous la forme d'agglomérés, tels que des billes, des extrudés ou des pastilles, obtenus à partir de la poudre au moyen de techniques d'agglomération connues de l'homme du métier. L'apport de chaleur peut se faire par l'intermédiaire d'un dispositif de type échangeur de chaleur dans lequel circule un fluide caloporteur porté à température. Alternativement, la mise en température peut être obtenue par une circulation forcée d'un gaz chaud qui est mis en contact avec le composé thermochimique.

La déshydratation du composé thermochimique est obtenue par chauffage jusqu'à une température qui dépend du composé thermochimique et de son degré d'hydratation.

Dans le mode de réalisation représenté à la figure 2, le réacteur 12 comprend trois lits fixes 13 contenant le composé thermochimique qui se présente par exemple sous la forme d'agglomérés (du type pastille ou granulé) ou d'une poudre. Les lits fixes sont contenus par des grilles supérieure 14 et inférieure 15, dont la dimension des ouvertures est inférieure à celle des agglomérés ou de la poudre de manière à pouvoir retenir le composé thermochimique tout en laissant passer la vapeur d'eau formée lors de la réaction de déshydratation.

Dans la configuration de la figure 2, un lit fixe 13 est séparé de son ou ses plus proches voisins par une zone 16 dite de collecte, laquelle est configurée pour collecter la vapeur d'eau issue de la réaction de déshydratation. La zone de collecte 16 est par ailleurs équipée d'un moyen de soutirage 17, par exemple une conduite, configuré pour évacuer l'eau désorbée de manière à maintenir le produit thermochimique déshydraté isolé. L'eau vaporisée des zones de collecte 16 est éventuellement transférée au moyen d'une conduite 18 vers une unité de condensation 19.

Dans le cas où la zone de collecte est équipée de moyens pour condenser l'eau libérée pendant l'étape de déshydratation, ladite zone est avantageusement pourvue d'un plateau collecteur (non représenté) pour récupérer l'eau de déshydratation sous forme liquide et ledit plateau étant par ailleurs connecté au moyen de soutirage 17.

Dans l'exemple de la figure 2, l'apport de chaleur au composé thermochimique se fait grâce à un système d'échangeur de chaleur composé d'un ensemble de tuyauterie 20, 21, 22, 23 qui parcourt chacun des lits fixes 13 et dans lequel circule un fluide caloporteur. À titre d'exemple, le fluide caloporteur peut être de la vapeur d'eau sous pression, un sel fondu ou encore une huile de synthèse. Le fluide caloporteur refroidi est évacué de l'enceinte 12 par les conduites 24, 25, 26, 27 et envoyé vers une station de stockage (non représentée).

Lorsque le composé thermochimique est sous forme d'une poudre, il est avantageux de réaliser l'échange thermique en injectant directement un fluide gazeux chaud dans le lit de composé thermochimique depuis le fond du réacteur thermochimique. De préférence, l'injection du gaz est réalisée à une vitesse suffisante pour non seulement fluidiser (i.e. mettre en suspension) le lit de particules et assurer ainsi un bon échange thermique mais également permettre un entrainement de l'eau produite lors de la réaction de déshydratation. À titre d'exemple pour l'étape de déshydratation, on peut employer, comme gaz de fluidisation du diazote, de l'air sec ou déshumidifié.

Une fois l'opération de stockage de la chaleur achevée, on obtient un composé thermochimique au moins partiellement déshydraté. Le composé thermochimique peut alors être stocké (étape (b)) à l'abri de l'humidité pour pouvoir être utilisé lors d'une phase de redistribution d'énergie calorifique, qui peut être différée dans le temps, pour répondre à une demande forte et ponctuelle en énergie. Le composé thermochimique peut être stocké soit à l'intérieur même du réacteur 3 si ce dernier est étanche à l'humidité, soit évacué vers un réservoir de stockage dédié qui doit être également étanche à l'humidité.

Un mode de restitution de l'énergie stockée, par exemple pour assurer un complément de production de chaleur en cas de forte demande ponctuelle, est décrit en référence à la figure 3 qui met en oeuvre un réacteur thermochimique 3 semblable à celui de la figure 2. Le réacteur 3 comprend en outre des moyens pour fournir de l'eau pour réhydrater le composé thermochimique déshydraté. Ainsi de l'eau, par exemple sous forme de gouttelettes atomisées ou de vapeur préchauffée, est acheminée à partir du réservoir 19 contenant par exemple de l'eau condensée au cours de l'étape de déshydratation par le conduit d'alimentation 28 équipée d'une vanne 29 vers des moyens de distribution d'eau 30. Un apport de chaleur 31 par n'importe quel moyen de chauffage approprié peut être prévu pour ajuster la température souhaitée de l'eau ou de la vapeur. Comme montré sur la figure 3, les moyens de distribution 30 sont disposés de préférence au-dessus des lits 13.

La chaleur d'hydratation est libérée et transférée au fluide caloporteur qui circule dans les conduites 20, 21, 22 et 23. La conduite 20 est également équipée d'une vanne 32 qui permet de réguler le débit du fluide caloporteur qui circule au sein du réacteur thermochimique. Le fluide caloporteur chauffé est extrait du réacteur 3 par les conduites 24, 25, 26, 27 et envoyé, par exemple, vers une unité de production d'énergie telle qu'une centrale électrique thermique ou bien vers un système de chauffage urbain qui utilise directement la chaleur. Le dégagement de chaleur est contrôlé par l'humidité apportée au composé thermochimique tandis le débit du fluide caloporteur permet d'ajuster la variation de température $\Delta T$. Il est possible de prévoir des moyens de détection de la température placés dans le réacteur thermochimique et sur la conduite d'évacuation du fluide caloporteur qui sont reliés à un système de régulation de débit des vannes 29 et 32.

Dans le cas où le réacteur thermochimique employé pour l'étape de déstockage de la chaleur est de type lit fluidisé, on envoie le gaz caloporteur/fluidisation directement depuis le fond du réacteur en même temps que l'eau d'hydratation qui est distribuée à partir du haut du réacteur. Par exemple, le gaz caloporteur/fluidisation est de l'air ou un gaz inerte et éventuellement préchauffé. On peut également envisager une injection d'ozone dans le cas où l'on souhaite procéder à une hydratation en milieu oxydant afin de restaurer les capacités de stockage du couple $UO_3$ amorphe/$UO_3.2H_2O$ ou $UO_3$ amorphe/$UO_3.0,8$-$1H_2O$.

**Exemples**

Exemple 1 ($UF_4.nH_2O$)

L'étude de l'hydratation a été réalisée à partir d'$UF_4$ anhydre fourni par la société Orano, qui a été produit par hydrofluoration d'oxyde d'uranium $UO_2$. Le composé contient comme impureté de l'$UO_2$ (détecté par diffraction des rayons X (DRX) réalisé sur la poudre) et présente une surface spécifique BET d'environ 0,4 m$^2$/g.

Les poudres d'$UF_4$ anhydres sont mises en contact avec de l'eau distillée dans les conditions ambiantes et filtrées au bout d'un mois. Les poudres filtrées sont ensuite séchées à l'air et analysées par ATG (Analyse Thermogravimétrique) et DRX.

La diffraction X révèle la formation de la phase $UF_4.2,5H_2O$ et l'ATG une hydratation à hauteur de 2,68 $H_2O$/U (perte de masse de 13,32 %, perte de masse théorique d'$UF_4.2,5H_2O$ de 12,54 %). Les masses volumiques théoriques d'$UF_4$ et $UF_4.2,5H_2O$ sont 6,72 et 4,76 g/cm$^3$ respectivement, ce qui représente une variation de volume de 38 %. On constate que la perte d'eau d'$UF_4.2,5H_2O$ s'effectue majoritairement entre 100 à 250 °C. Le premier pic endothermique situé vers 115 °C correspond à la perte de 0,5 molécule d'eau libre. Le deuxième pic endothermique vers 190 °C correspond au départ des molécules d'eau coordonnées à l'uranium. L'énergie de déshydratation totale, répartie en deux pics endothermiques, est d'environ $1,44 \pm 23$ GJ/m$^3$.

Une autre étude de l'hydratation, en conditions plus douces, a été menée en plaçant la poudre d'$UF_4$ dans une armoire thermostatée à 25 °C, et sous humidité relative avoisinant 97 % contrôlée grâce à une solution sursaturée de $K_2SO_4$. L'analyse par diffraction X révèle un changement de phases au bout de 125 jours d'hydratation. La phase $UF_4.2,5H_2O$ commence à cristalliser sans qu'il ne soit observé d'intermédiaires d'hydratation. L'hydratation de la phase anhydre est donc possible par changement d'humidité, bien que la cinétique soit lente.

Exemple 2 ($UO_2F_2.4H_2O$)

Le fluorure d'uranyle fourni par Orano présentant une phase isotype de $\gamma$-$UO_2F_2.2H_2O$ a été chauffé à 250 °C sous flux d'air sec avec une vitesse de 5 °C/min. L'échantillon est maintenu en température pendant 30 min puis refroidi à la même vitesse. La perte de masse expérimentale, de 17,47 %, rend compte d'une composition initiale proche de $UO_2F_2.3,63H_2O$.

L'échantillon d'$UO_2F_2$ déshydraté est ensuite maintenu à une température d'environ 26 °C et sous une humidité relative d'environ 84 %. On suit la variation de la masse de l'échantillon en fonction du temps. En référence à la figure 5, on observe que l'hydratation de l'$UO_2F_2$ déshydraté s'effectue en deux étapes de cinétiques différentes :

- une première étape, à la vitesse de 3,43 $H_2O$/U/h, conduit à un gain en masse correspondant à 4 molécules d'$H_2O$/U,
- une deuxième, plus lente d'environ 0,22 $H_2O$/U/h entraine une hydratation finale à hauteur de 4,85 molécules d'$H_2O$/U.

L'expérience a été renouvelée sur trois cycles et les résultats sont tout à fait reproductibles comme l'indique la figure 5.

Un autre essai a été réalisé avec le composé $\alpha$-$UO_2F_2$ obtenu par chauffage de $UO_2F_2.3,43H_2O$ à 200 °C pendant 1 h. Le composé anhydre a été ensuite hydraté à l'air en conditions ambiantes. Ce mode d'hydratation conduit à la formation de $\beta$-$UO_2F_2.1,6H_2O$.

Les masses volumiques théoriques de $\alpha$-$UO_2F_2$ et de $\beta$-$UO_2F_2.1,6H_2O$ sont de 6,38 et 4,77 g/cm³ respectivement, ce qui représente une variation de volume de 51 %. L'utilisation de la calorimétrie différentielle à balayage permet de déterminer que l'énergie de déshydratation mise en jeu lors de la décomposition thermique de la phase $\beta$-$UO_2F_2.1,6H_2O$ est d'environ 0,97 GJ/m³.

Exemple 3 ($UO_3.nH_2O$)

$UO_3.2H_2O$ a été synthétisé par hydratation d'$UO_3$ amorphe. Pour cela, la studtite, peroxyde d'uranyle de formule $[(UO_2)(O_2)(H_2O)_2].2H_2O$, est synthétisée par précipitation. Ce précurseur est ensuite chauffé jusqu'à transformation en $UO_3$ amorphe qui est ensuite hydraté en $UO_3.2H_2O$.

La précipitation de $[(UO_2)(O_2)(H_2O)_2].2H_2O$ est effectuée par ajout goutte à goutte d'une solution de $H_2O_2$ 30 % (VWR Chemicals) à une solution de $UO_2(NO_3)_2.6H_2O$ à 0,5M ($H_2O_2/U$ = 2 mol/mol). La solution est agitée pendant 3 min. Le précipité de couleur jaune pâle est centrifugé à 4500 tours/min pendant 5 min et lavé plusieurs fois à l'eau distillée puis avec une solution $H_2O$:éthanol (50:50 en volume) afin d'éliminer les nitrates résiduels. La poudre est ensuite séchée à l'air ou dans une étuve à 30 °C avant d'être calcinée à 300 °C pendant 2 h sous flux d'argon, avec une rampe de montée en température de 5 °C/min. Le composé amorphe ainsi obtenu est mis en forme puis hydraté sous une humidité relative HR d'environ 97 % en présence d'une solution sursaturée de $K_2SO_4$ dans une armoire thermostatée à 25 °C. Lors de l'hydratation, on observe que le composé passe progressivement de la couleur marron à la couleur jaune, caractéristique de la métaschoepite.

Des essais d'hydratation/déshydratation d'UOs ex-studtite sous la forme de pastille ont été réalisés afin d'évaluer l'influence de la mise en forme sur la cyclabilité du système $UO_3$ amorphe/$UO_3$ métaschoepite.

Des pastilles d'UOs amorphe ex-studtite (300 mg de poudre) ont été formées à l'aide d'une presse hydraulique et d'un moule de diamètre 8 mm. Une pression de 200 MPa est appliquée sur la poudre durant 5 min de manière à fournir, après démoulage, des pastilles ayant une masse d'environ 300 mg, un diamètre de 8 mm et une hauteur de 1,32 mm.

Les pastilles sont placées à 25 °C sous air statique à une humidité relative d'environ 97 % de manière à hydrater l'$UO_3$ amorphe ex-studtite en métaschoepite.

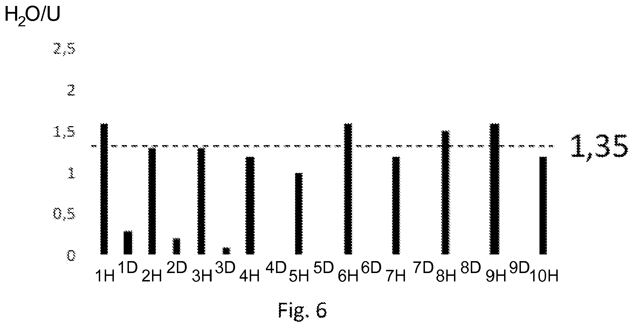

L'étude de cyclabilité est menée sur 10 cycles au cours desquels les étapes d'hydratation sont réalisées pendant 24 h sous un débit d'air de 50 mL/min à environ 30 °C et avec une humidité relative HR comprise entre 90-95 % et les étapes de déshydratation par chauffage à 350 °C pendant 2 h sous flux d'air synthétique. Le nombre moyen des molécules d'eau mis en jeu au cours des cycles déterminé à partir des masses de poudre après chaque étape est donné sur la figure 6.

Les masses volumiques d'UOsamorphe et d'$UO_3.2H_2O$ sont d'environ 7,11 et de 4,97 g/cm³ respectivement, ce qui représente une variation de volume de 38 %. L'utilisation de la calorimétrie différentielle à balayage (DSC selon la terminologie anglosaxonne) a permis de déterminer l'énergie de déshydratation mise en jeu lors de la décomposition thermique de la phase $UO_3.2H_2O$. Un premier pic endothermique situé au-dessous de 200 °C correspond au départ des molécules d'eau interfeuillets (environ 1,25 $H_2O/U$). Le deuxième pic situé entre 250 et 430 °C correspond au départ des groupements hydroxyde sous forme de molécules d'eau (environ 0,75 $H_2O/U$). L'intégration de la courbe DSC permet d'estimer une énergie totale comprise entre 233-347 J/g (soit 1,16-1,72 GJ/m³).

**Revendications**

**1.** Procédé de stockage et de libération d'énergie thermique par voie thermochimique au moyen d'un composé sous forme solide de formule $AO_xB_y.zH_2O$, où :

- A est un élément choisi parmi l'uranium (U) et le thorium (Th) ;
- O est l'élément oxygène ;
- B est un anion ou un oxoanion ;
- x est un nombre compris entre 0 et 4 ;
- y est un nombre compris entre 0 et 2 ; et
- z est un nombre supérieur à 0 et inférieur à 10 ;

étant entendu que l'un au moins de x et y est différent de 0 et que le composé de formule $Th(SO_4)_2 \cdot xH_2O$ est exclu, le procédé comprenant les étapes successives suivantes :

(a) on chauffe le composé jusqu'à une température et pendant une durée suffisantes pour déshydrater au moins partiellement ledit composé ;

(b) on conserve le composé au moins partiellement déshydraté à l'abri de l'humidité ;

(c) on met en contact le composé au moins partiellement déshydraté avec de l'eau pour libérer l'énergie thermique stockée à l'étape (a) ; et

(d) on récupère l'énergie thermique libérée.

2. Procédé selon la revendication précédente, dans lequel l'étape (a) est opérée jusqu'à obtenir le composé anhydre.

3. Procédé selon l'une des revendications précédentes, dans lequel l'étape (c) est réalisée en présence de vapeur d'eau.

4. Procédé selon l'une des revendications précédentes, dans lequel le chauffage de l'étape (a) est réalisé à partir d'énergie solaire et/ou d'énergie thermique d'origine industrielle.

5. Procédé selon la revendication 4, dans lequel l'énergie thermique est générée par des centrales d'énergies, des raffineries ou des usines de transformation de matière.

6. Dispositif de stockage d'énergie thermique (1) comprenant :

- une enceinte (12) incluant au moins un lit (13) contenant un composé sous forme solide de formule $AO_xB_y \cdot zH_2O$, où :

. A est un élément choisi parmi l'uranium (U) et le thorium (Th) ;
. O est l'élément oxygène ;
. B est un anion ou un oxoanion ;
. x est un nombre compris entre 0 et 4 ;
. y est un nombre compris entre 0 et 2 ;
. z est un nombre supérieur à 0 et inférieur à 10 ;

étant entendu que l'un au moins de x et y est différent de 0 et que le composé de formule $Th(SO_4)_2 \cdot xH_2O$ est exclu ;
- au moins un moyen de chauffage (20, 21, 22, 23) du lit (13) ; et
- au moins un moyen de soutirage (17) de l'eau de déshydratation.

7. Dispositif de stockage selon la revendication 6, comprenant en outre un moyen de distribution (30) d'eau et un moyen d'évacuation (24, 25, 26, 27) de l'énergie thermique libérée.

8. Dispositif selon l'une des revendications 6 et 7, dans lequel le composé se présente sous forme d'une poudre, de bille, d'extrudé, de pastille.

9. Dispositif selon l'une des revendications 6 et 7, dans lequel le composé est déposé sur un support inorganique ou organique.

10. Dispositif selon la revendication 8, dans lequel le composé est sous forme de poudre et le lit (13) est un lit fluide.

11. Dispositif selon la revendication 8, le composé étant sous forme de bille, d'extrudé ou de pastille, ou selon la revendication 9, dans lequel le lit (13) est un lit fixe.

12. Procédé selon l'une quelconque des revendications 1 à 5 ou dispositif selon l'une quelconque des revendications 6 à 11, dans lequel B est choisi parmi les ions halogénures, l'ion hydroxyde et l'ion sulfate.

13. Procédé ou dispositif selon la revendication 12, dans lequel le composé est choisi parmi :

- $UO_2B_2 \cdot zH_2O$, B étant choisi parmi $F^-$, $Br^-$ et $Cl^-$ ;

- $AB_4.zH_2O$, B étant choisi parmi $F^-$ et $Br^-$ ;
- $UO_3.zH_2O$;
- $UO_4.zH_2O$ ; et
- $U(SO_4)y.zH_2O$.

14. Procédé ou dispositif selon la revendication 13, dans lequel le composé est choisi parmi $ThBr_4.10H_2O$, $UF_4.2H_2O$, $UF_4.2,5H_2O$, $UO_2F_2.4H_2O$ et $UO_2F_2.1,6H_2O$.

15. Procédé ou dispositif selon la revendication 13, dans lequel le composé est choisi parmi $UO_4.2H_2O$, $UO_3.2H_2O$ et $UO_3.0,8-1H_2O$.

**Patentansprüche**

1. Thermochemisches Verfahren zum Speichern und zum Freisetzen von thermischer Energie mittels einer Verbindung in fester Form der Formel $AO_xB_y.zH_2O$, wobei:

   - A ein Element ist, das aus Uran (U) und Thorium (Th) ausgewählt ist;
   - O das Sauerstoffelement ist;
   - B ein Anion oder ein Oxoanion ist;
   - x eine Zahl zwischen 0 und 4 ist;
   - y eine Zahl zwischen 0 und 2 ist; und
   - z eine Zahl größer als 0 und kleiner als 10 ist;

   mit der Maßgabe, dass mindestens eins von x und y von 0 unterschiedlich ist und dass die Verbindung der Formel $Th(SO_4)_2.xH_2O$ ausgeschlossen ist,
   wobei das Verfahren die folgenden aufeinanderfolgenden Schritte umfasst:

   (a) Erwärmen der Verbindung bis auf eine Temperatur und während einer Dauer, die ausreichend sind, um die Verbindung mindestens teilweise zu entwässern;
   (b) Aufbewahren der mindestens teilweise entwässerten Verbindung vor Feuchtigkeit geschützt;
   (c) Inkontaktversetzen der mindestens teilweise entwässerten Verbindung mit Wasser, um die in Schritt (a) gespeicherte thermische Energie freizusetzen; und
   (d) Rückgewinnen der freigesetzten thermischen Energie.

2. Verfahren nach vorangehendem Anspruch, wobei der Schritt (a) bis zum Erhalt der wasserfreien Verbindung durchgeführt wird.

3. Verfahren nach einem der vorangehenden Ansprüche, wobei der Schritt (c) bei Anwesenheit von Wasserdampf durchgeführt wird.

4. Verfahren nach einem der vorangehenden Ansprüche, wobei das Erwärmen von Schritt (a) ausgehend von Solarenergie und/oder von thermischer Energie industriellen Ursprungs durchgeführt wird.

5. Verfahren nach Anspruch 4, wobei die thermische Energie durch Kraftwerke, Raffinerien oder Materialverarbeitungsanlagen erzeugt wird.

6. Vorrichtung zum Speichern thermischer Energie (1), umfassend:

   - einen Behälter (12), der mindestens ein Bett (13) einschließt, das eine Verbindung in fester Form der Formel $AO_xB_y.zH_2O$ enthält, wobei:

      A ein Element ist, das aus Uran (U) und Thorium (Th) ausgewählt ist;
      O das Sauerstoffelement ist;
      B ein Anion oder ein Oxoanion ist;
      x eine Zahl zwischen 0 und 4 ist;
      y eine Zahl zwischen 0 und 2 ist; und
      z eine Zahl größer als 0 und kleiner als 10 ist;

mit der Maßgabe, dass mindestens eins von x und y von 0 unterschiedlich ist und dass die Verbindung der Formel $Th(SO_4)_2.xH_2O$ ausgeschlossen ist,
- mindestens ein Heizmittel (20, 21, 22, 23) des Betts (13); und
- mindestens ein Mittel zum Abziehen (17) des Entwässerungswassers.

7. Speichervorrichtung nach Anspruch 6, umfassend ferner ein Mittel zum Verteilen (30) von Wasser und ein Mittel zum Ableiten (24, 25, 26, 27) der freigesetzten thermischen Energie.

8. Vorrichtung nach einem der Ansprüche 6 und 7, wobei die Verbindung in Form eines Pulvers, Kugel, Extrudat, Pellet vorliegt.

9. Vorrichtung nach einem der Ansprüche 6 und 7, wobei die Verbindung auf einem anorganischen oder organischen Träger abgelegt ist.

10. Vorrichtung nach Anspruch 8, wobei die Verbindung in Pulverform ist und das Bett (13) ein Fluidbett ist.

11. Vorrichtung nach Anspruch 8, wobei die Verbindung in Form von Kugel, Extrudat oder Pellet ist oder nach Anspruch 9, wobei das Bett (13) ein festes Bett ist.

12. Verfahren nach einem der Ansprüche 1 bis 5 oder Vorrichtung nach einem der Ansprüche 6 bis 11, wobei B aus den Halogenidionen, dem Hydroxidion und dem Sulfation ausgewählt ist.

13. Verfahren oder Vorrichtung nach Anspruch 12, wobei die Verbindung ausgewählt ist aus:

- $UO_2B_2.zH_2O$, wobei B aus $F^-$, $Br^-$ und $Cl^-$ ausgewählt ist;
- $AB_4.zH_2O$, wobei B aus $F^-$ und $Br^-$ ausgewählt ist;
- $UO_3.zH_2O$;
- $UO_4.zH_2O$; und
- $U(SO_4)_y.zH_2O$.

14. Verfahren oder Vorrichtung nach Anspruch 13, wobei die Verbindung aus $ThBr_4.10H_2O$, $UF_4.2H_2O$, $UF_4.2,5H_2O$, $UO_2F_2.4H_2O$ und $UO_2F_2.1,6H_2O$ ausgewählt ist.

15. Verfahren oder Vorrichtung nach Anspruch 13, wobei die Verbindung aus $UO_4.2H_2O$, $UO_3.2H_2O$ und $UO_3.0,8-1H_2O$ ausgewählt ist.

**Claims**

1. Thermochemical method for storing and releasing thermal energy by means of a compound in solid form of formula $AO_xB_y.zH_2O$, in which:

- A is an element selected from uranium (U) and thorium (Th);
- O is the element oxygen;
- B is an anion or an oxoanion;
- x is a number comprised between 0 and 4;
- y is a number comprised between 0 and 2; and
- z is a number greater than 0 and less than 10;

it being understood that at least one of x and y is different from 0 and that the compound of formula $Th(SO_4)_2.xH_2O$ is excluded,
the method comprising the following successive steps:

(a) heating the compound to reach a temperature and for a period that are sufficient to at least partially dehydrate said compound;
(b) keeping the at least partially dehydrated compound away from humidity;
(c) placing the at least partially dehydrated compound in contact with water to release the thermal energy stored at step (a); and

(d) recovering the released thermal energy.

2. Method according to the preceding claim, in which step (a) is carried out until the anhydrous compound is obtained.

3. Method according to one of the preceding claims, in which step (c) is carried out in the presence of water vapor.

4. Method according to one of the preceding claims, in which the heating of step (a) is carried out using solar energy and/or thermal energy of industrial origin.

5. Method according to claim 4, in which the thermal energy is generated by power stations, refineries or material processing plants.

6. Thermal energy storage device (1) comprising:

- an enclosure (12) including at least one bed (13) containing a compound in solid form of formula $AO_xB_y.zH_2O$, in which:

. A is an element selected from uranium (U) and thorium (Th);
. O is the element oxygen;
. B is an anion or an oxoanion;
. x is a number comprised between 0 and 4;
. $\gamma$ is a number comprised between 0 and 2;
. z is a number greater than 0 and less than 10;

it being understood that at least one of x and y is different from 0 and that the compound of formula $Th(SO_4)_2.xH_2O$ is excluded;
- at least one heating means (20, 21, 22, 23) of the bed (13); and
- at least one withdrawal means (17) of the dehydration water.

7. Storage device according to claim 6, further comprising a means (30) for distributing water and a means (24, 25, 26, 27) for evacuating the thermal energy released.

8. Device according to one of claims 6 and 7, in which the compound is in the form of a powder, a bead, an extrudate, or a pellet.

9. Device according to one of claims 6 and 7, in which the compound is deposited on an inorganic or organic support.

10. Device according to claim 8, in which the compound is in the form of a powder and the bed (13) is a fluid bed.

11. Device according to claim 8, the compound being in the form of a bead, an extrudate or a pellet, or according to claim 9, in which the bed (13) is a fixed bed.

12. Method according to any one of claims 1 to 5 or device according to any one of claims 6 to 11, in which B is selected from halide ions, the hydroxide ion and the sulfate ion.

13. Method or device according to claim 12, in which the compound is selected from:

- $UO_2B_2.zH_2O$, B being selected from the $F^-$, $Br^-$ and $Cl^-$;
- $AB_4.zH_2O$, B being selected from $F^-$ and $Br^-$;
- $UO_3.zH_2O$;
- $UO_4.zH_2O$, and
- $U(SO_4)_\gamma.zH_2O$.

14. Method or device according to claim 13, in which the compound is selected from $ThBr_4.10H_2O$, $UF_4.2H_2O$, $UF_4.2,5H_2O$. $UO_2F_2.4H_2O$ and $UO_2F_2.1,6H_2O$.

15. Method or device according to claim 13, in which the compound is selected from $UO_4.2H_2O$, $UO_3.2H_2O$ and $UO_3.0,8-1H_2O$.

Fig. 1

Fig. 2

Fig. 3

Fig. 4

Fig. 5

H$_2$O/U

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 3004246

**Littérature non-brevet citée dans la description**

• **WILSON et al.** Structure of the Homoleptic Thorium(IV) Aqua Ion [Th(H2O)10]Br4. *Angew. Chemie Int. Ed.,* 2007, vol. 46, 8043-8045

• **ROUQUEROL F. ; ROUQUEROL J. ; SINGH K.** Adsorption by Powders & Porous Solids: Principle, methodology and applications. Academic Press, 1999